# EUROPEAN PATENT APPLICATION

(11) **EP 2 657 709 A2**
(43) Date of publication of application: **30.10.2013**
(21) Application number: 13156860.2
(22) Date of filing: 26.02.2013
(51) Int. Cl.: G01P 21/02, G01P 3/489, G01D 5/245

(54) **Detecting rotation of an encoder with short or missing teeth**

(30) Priority: 27.04.2012 US 201213458299
(71) Applicant: Hamilton Sundstrand Corporation, Windsor Locks, CT 06096-1010 (US)
(72) Inventor: Hess, Gary L., Enfield, CT 06082 (US); Saloio, James, Ludlow, MA 01056 (US); COX, Robert E., Somers, CT Connecticut 06071 (US); Burke, Kirkpatrick A., Windsor, CT 06095 (US); Leblanc, Paul J., Thomaston, CT 06787 (US)
(74) Representative: Tomlinson, Kerry John

(57) **Abstract**

An apparatus (200) configured to detect rotation of a shaft includes a sensor (104) cooperating with an encoder having a plurality of teeth (107,108) located circumferentially on a rotating shaft (106). A processor is configured to detrmine whether the current tooth is located within the vicinity of a position reference gap defined by at least one missing tooth (M). In this case, shaft position data and shaft rotation speed data are not directly based on the timing of the current tooth. The speed in the vicinity of the reference gap is derived from timing data determined from teeth outside the vicinity of the reference gap. The reference position is no derived from a tooth adjacent the reference gap but rather from the N-th tooth following the gap. In this way, measurement errors caused by signal distortion in the vicinity of the reference gap due to the missing teeth can be avoided.

## Description

### BACKGROUND OF THE INVENTION

The present disclosure relates to detecting rotation of a shaft having teeth. In particular, the present disclosure relates to detecting the rotation of a shaft having teeth of different lengths.

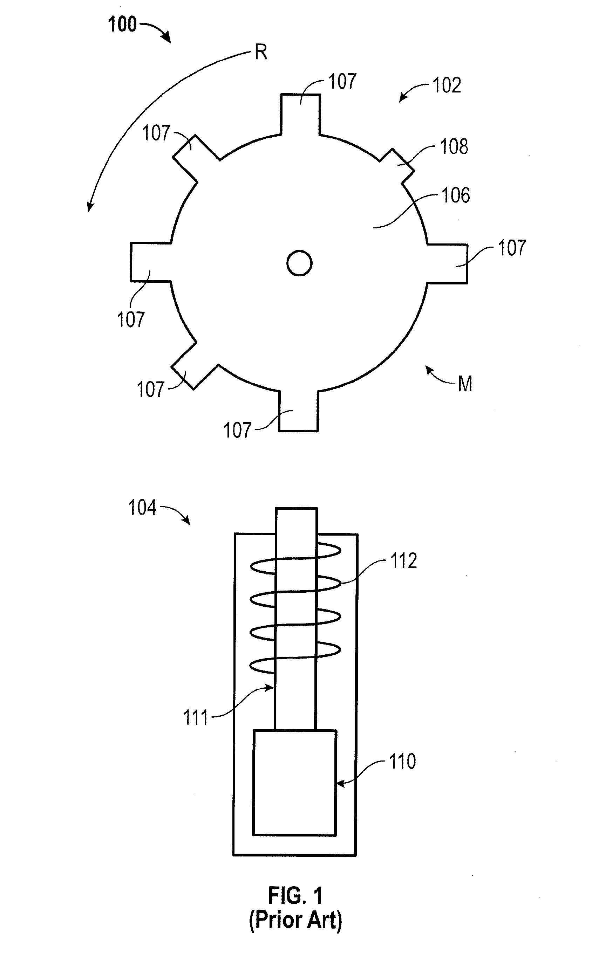

The rotation speed of a shaft may be determined by providing teeth on the shaft and determining a rate at which the teeth pass a sensor such as, for example, a magnetic pickup (MPU) sensor, or a variable reluctance (VR) sensor. FIG. 1 illustrates a conventional rotation detection apparatus 100. The apparatus 100 includes a rotor 102 and a sensor 104. The rotor 102 includes a shaft 106, a plurality of teeth 107 of a first length, and one or more teeth 108 of a second length that is less than the first length, and one or more missing teeth M having a length of zero. For example, the tooth 108 has a length less than the teeth 107, but greater than zero, and the reference letter M corresponds to a gap which may be referred to throughout the present specification and claims as a missing tooth M. In other words, the teeth 107 and 108 are spaced at equal predetermined intervals around the shaft 106, and the missing tooth M is located at the predetermined interval from adjacent teeth 107 or 108.

As the shaft 106 rotates in the direction indicated by the reference letter R, the sensor 104 produces a varying electrical output that depends on the orientation of the shaft 106. In one example, the sensor 104 is a VR sensor that includes a coil 112 coiled around a pole 111 that is connected to a magnet 110. As the shaft 106 rotates, the teeth 107 and 108 cause the sensor 104 to generate output voltages that are different than those generated by portions of the shaft 106 that do not have a tooth, such as the area missing a tooth and is indicated by reference letter M. By detecting the rate at which the teeth 107 and 108, and the missing tooth M, pass the sensor 104, the rotation speed and position of the shaft 106 may be detected.

### BRIEF DESCRIPTION OF THE INVENTION

The invention provides a method of detecting characteristics of a rotating shaft having a plurality of teeth and at least one missing tooth. The method includes detecting one of the plurality of teeth located on the shaft, determining whether the one of the plurality of teeth is located within a predetermined distance of the at least one missing tooth; and omitting data corresponding to the one of the plurality of teeth from at least one of a shaft position calculation and a shaft rotation speed calculation based on a determination that the one of the plurality of teeth is located within the predetermined distance of the at least one missing tooth.

The invention also provides an apparatus including a sensor configured to detect a first tooth from among a plurality of teeth located around a rotating shaft and a processor configured to determined whether the first tooth is located within a predetermined range of a missing tooth, and configured to calculate at least one of shaft position data and shaft rotation speed data having data corresponding to the first tooth omitted based on the determination that the first tooth is located within the predetermined range of the missing tooth.

The invention also provides a system including a shaft having a plurality of teeth located around the shaft and a missing tooth located between two of the plurality of teeth, a sensor configured to output a signal when one of the plurality of teeth comes into the vicinity of the sensor, and a processor configured to determine whether a first tooth from among the plurality of teeth is located within a predetermined distance of the missing tooth and to calculate at least one of a shaft position and shaft rotation speed having data corresponding to the first tooth omitted based on the determination that the first tooth is located within the predetermined distance of the missing tooth.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 illustrates a shaft rotation detection apparatus according to an embodiment of the present disclosure;

FIG. 2 illustrates a shaft position and rotation detection system according to an embodiment of the present disclosure;

FIG. 3 illustrates a sensor output according to an embodiment of the present disclosure;

FIG. 4 is a flowchart illustrating a method according to an embodiment of the present disclosure;

FIG. 5 is a flowchart illustrating a method of detecting a missing tooth according to an embodiment of the disclosure;

FIG. 6 is a flowchart illustrating a method of generating information relating to shaft position according to one embodiment;

FIG. 7 is a flowchart illustrating a method of generating information relating to shaft rotation speed according to one embodiment; and

FIG. 8 illustrates a shaft having teeth according to an embodiment of the present disclosure.

### DETAILED DESCRIPTION

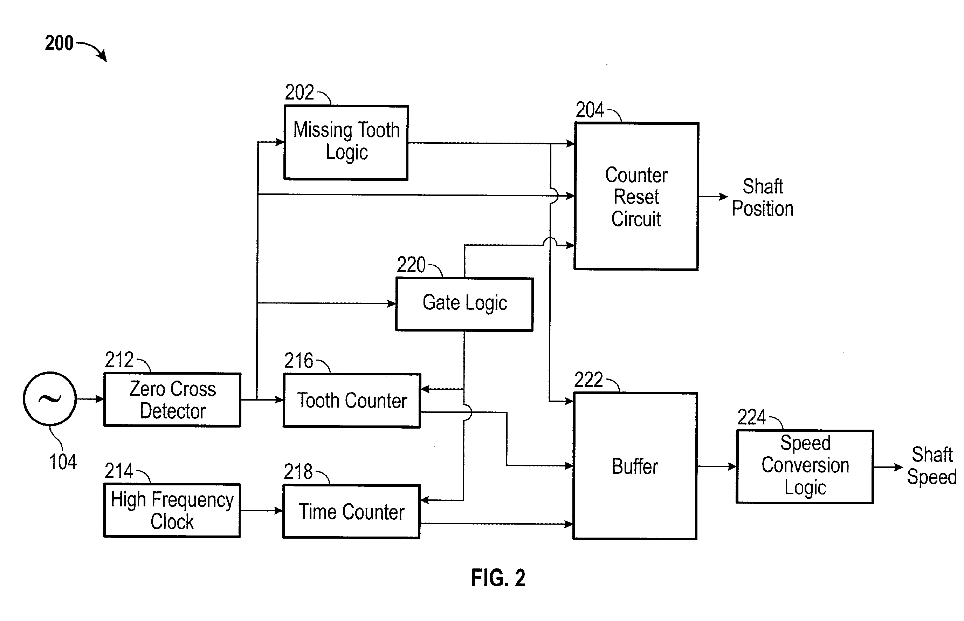

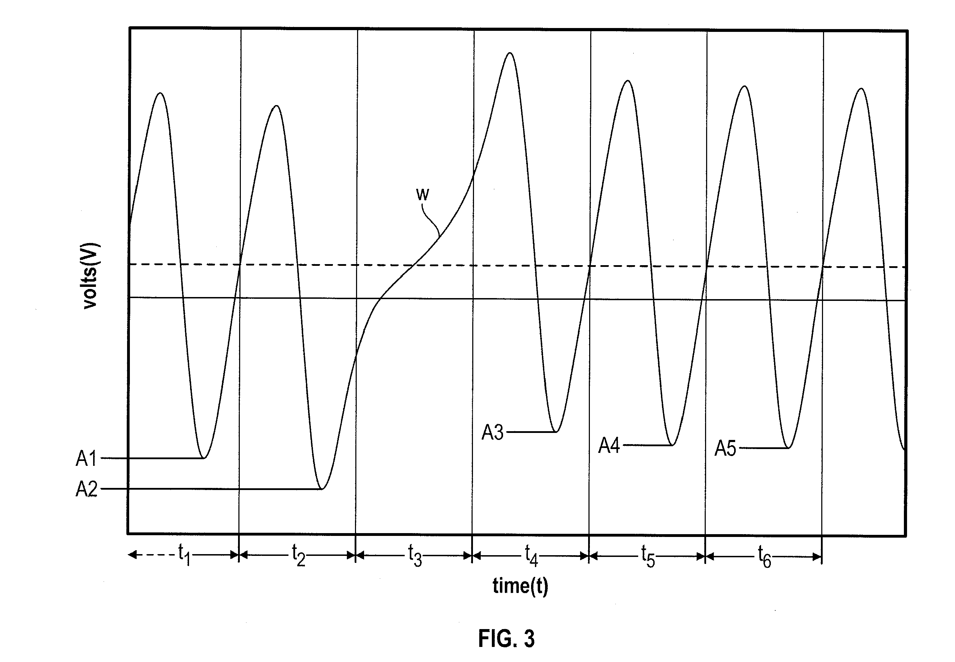

Embodiments of the present disclosure provide accurate shaft position or rotation information by omitting from shaft rotation speed or shaft position calculations information signals corresponding to teeth within a predetermined vicinity of a missing tooth, or a tooth having a varied length from one or more other teeth. FIG. 2 illustrates a system 200 according to an embodiment of the present disclosure. In one embodiment, the system includes a sensor 104, similar to the sensor 104 described with reference to FIG. 1. The sensor 104 generates a waveform as illustrated in FIG. 3. In other embodiments, an MPU sensor may be utilized without departing from the scope of the invention.

As a tooth 107 or 108 approaches the sensor 104, an amplitude of the waveform W may increase. As the rotor 102 continues to rotate and the tooth 107 or 108 moves from directly opposite the sensor 104 to away from the sensor 104, the amplitude of the waveform W may increase in the opposite direction. In portions of the rotor 102 that are farther from the missing tooth M, or from a shortened tooth 108, the width of one period of the waveform W may more closely correspond to the distance from one portion of a tooth 107 to a same portion of a next tooth 107 (such as leading edge to leading edge, middle to middle, or trailing edge to trailing edge) than a period generated by a tooth 107 closer to the missing tooth M or the shortened tooth 108. In particular, a missing tooth M or shortened tooth 108 may generate distortion in the amplitudes corresponding to teeth that precede and succeed the missing tooth M, or shortened tooth 108. The distortion may be more acute closer to the missing tooth M and shortened tooth 108, and may diminish the farther away from the missing tooth M and shortened tooth 108.

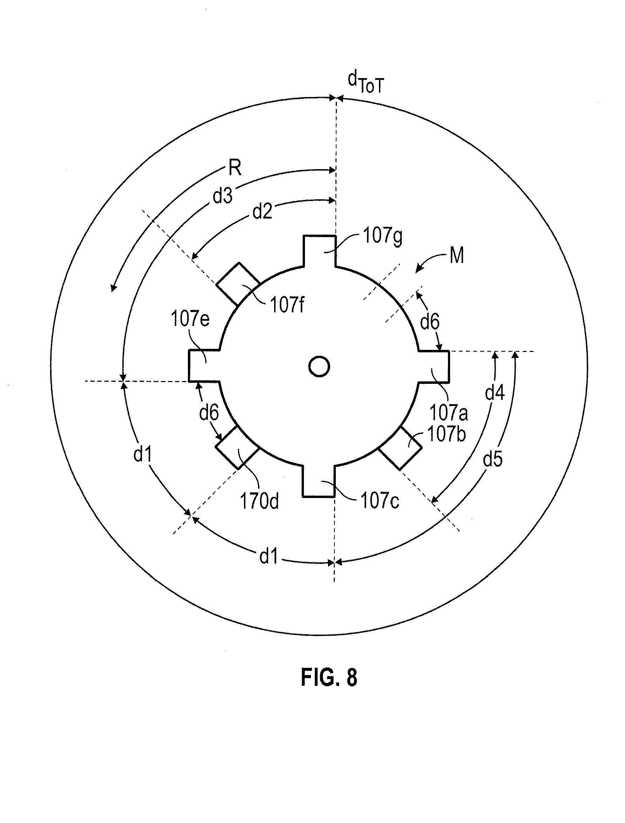

Referring to FIGS. 3 and 8, FIG. 3 illustrates a waveform corresponding to a rotor 102 having a missing tooth M (shown in dashed lines) as illustrated in FIG. 8. A plurality of teeth 107 may be spaced at equal intervals apart from each other, and a tooth 107 may be omitted from one of the equal intervals to form a gap or missing tooth M. In the present specification and claims, the term missing tooth M refers to a space located at the equal interval d6 from two adjacent teeth 107, where the equal interval d6 is an interval at which the rest of the teeth 107, or a majority of the teeth 107 located around the shaft 106 are spaced apart from each other. In alternative embodiments, the distance d6 between different teeth may vary according to a known pattern, such that by detecting the known pattern a system may determine a position of the shaft 106. In such an embodiment, the missing tooth M is spaced apart from two adjacent teeth 107 according to the known pattern.

In FIG. 3, time intervals t1, t2, t3, t4, t5, and t6 correspond approximately to a time from a part of one tooth to a same part of a next tooth. The time interval t3 corresponds approximately to a time at which the missing tooth M passes over the sensor 104. The time intervals t2 and t4 correspond approximately to the time at which the teeth 107a and 107g pass over the sensor 104, respectively. Similarly, time intervals t1, t5, and t6 correspond approximately to the time at which the teeth 107b, 107f, and 107e pass over the sensor 104, respectively.

As illustrated in FIG. 3, the amplitudes of the periods of the waveform W at time intervals t2 and t4 are distorted relative to the amplitude of the waveform at time intervals t1, t5, and t6. For example, while a lower peak of the waveform in time period t1 extends to a first amplitude A1, the lower peak of the waveform in time period t2 extends to a negative voltage A2 that is less than A1. Conversely, the negative peak in the time interval t4 is A3, which is higher than the negative peak A4 in the time interval t5, which is still greater than the negative peak A5 in the time interval A6.

The distortion in the negative peak is also reflected in the positive peaks, and generates distortion in the lengths of the waveforms corresponding to the respective teeth 107, such that the time periods t2 and t4 correspond less closely to a time that it takes the shaft to travel a distance d1 from one point of a tooth 107 to a same point at a next tooth 107 than time periods t1 and t5. Time periods t1 and t5, in turn, correspond less closely to the time that it takes the shaft to travel the distance d1 than the time period t6. In other words, the farther away along the shaft 106 a tooth 107 is located from the missing tooth M, the more accurate is a measured waveform corresponding to the tooth 107.

Embodiments of the present disclosure provide accurate speed and position calculations of a rotating shaft by omitting from the speed and position calculations the detected signals corresponding to teeth 107 closer to a missing tooth M. Although the embodiment of FIG. 8 illustrates a missing tooth M, it is understood that embodiments of the present disclosure encompass shortened teeth 108, combinations of shortened teeth 108 and missing teeth M, and multiple shortened teeth 108 or missing teeth M.

Referring again to FIG. 2, the system 200 includes a zero cross detector 212 to convert the input sine wave to a square wave. For example, referring to FIG. 3, the zero cross detector 212 may generate a high voltage at the transition from time interval t4 to t5, a low voltage at the transition at the center of time interval t5, a high voltage at the transition from time interval t5 to t6, etc.

The output of the zero cross detector 212 is provided to a tooth counter 216 that counts a number of detected teeth. Particularly, the tooth counter 216 may be incremented at each rising or falling edge of the waveform (e.g., at each zero crossing) output from the zero cross detector 212 to indicate a leading side or trailing side of a tooth 107. The tooth counter may output the tooth count to the buffer 222.

The system may also include gate logic 220, which outputs a detected rising or falling edge of the sine wave produced by sensor 104 as indicated by the zero cross detector 212, and whose output is provided to the time counter 218 to determine a rotation speed of the shaft 106. In particular, a clock signal may be provided to the time counter 218 from a high-frequency clock 214, the time between the rising and falling edges of sine waves may be calculated by the time counter 218 and compared to the clock signal to provide a timer interval of predetermined units (such as nanoseconds, microseconds, etc.), and the calculated time interval may be stored in the buffer 222. The speed conversion logic 224 may access the calculated time interval and divide a known distance d1 between a same point on two adjacent teeth 107 by the calculated time interval to calculate a rotation speed of the shaft 106. The output of the gate counter 220 may also be provided to the tooth counter 216 to provide an indicator of a detected rising or falling edge of the sine wave to the tooth counter 216.

The system further includes missing tooth logic 202 to determine whether a detected waveform corresponds to the location of a missing tooth M, and a counter reset circuit to receive missing tooth information from the missing tooth logic 202 and tooth count information from the tooth counter 216 and to output shaft position information.

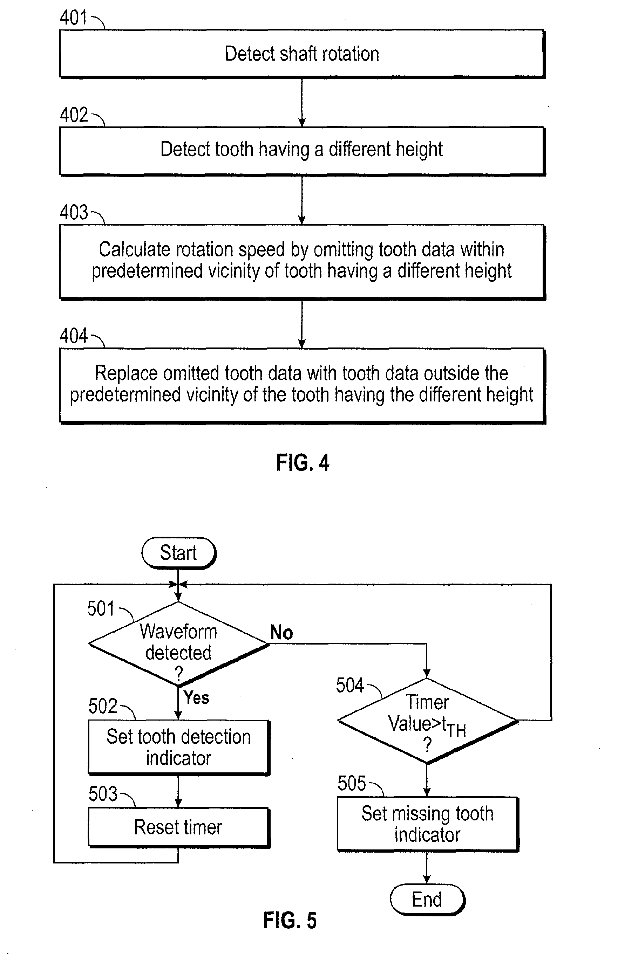

Operation of the system 200 will be described in further detail below with reference to FIGS. 4-7. FIG. 4 describes generally the operation of the system 200.

In operation 401, the shaft rotation is detected. For example, the sensor 104 may detect a waveform, and the zero cross detector 212 may detect a rising or falling edge of the waveform. The signal output from the zero cross detector 212 corresponding to the rising or falling edge of the waveform may be output to the missing tooth logic 202, the counter reset circuit 204, the gate logic 220, and the tooth counter 216. In operation 402, a tooth having a different height may be detected. In particular, the missing tooth logic 202 may detect whether a presently-detected waveform corresponds to a missing tooth M. In alternative embodiments, the missing tooth logic 202 may also detect whether the presently-detected waveform corresponds to a shortened tooth 108.

FIG. 5 illustrates a method of detecting a missing tooth M according to an embodiment of the present disclosure. In operation 501, a waveform is detected. For example, referring to FIGS. 3 and 8, a leading edge of a tooth 107e may be detected by detecting the transition from time period t5 to time period t6.

If the waveform is detected in operation 501, then a tooth detection indicator is set in operation 502, and a timer is reset in operation 503. The timer and the tooth detection indicator may be part of the gate logic 220, for example. Alternatively, the timer may be part of the missing tooth logic 202. After the timer is reset in operation 503, then if a waveform is not detected in operation 501, it is determined in operation 504 whether the value of the time in the timer is greater than a threshold value t_{TH}. Referring to FIGS. 3 and 8, for example, where each of the time intervals t2-t6 approximately correspond to a time interval for the shaft to rotate a distance d1, the threshold value t_{TH} may be a value greater than each one of t2 through t6, such as 1.1 x t2, 1.25 x t2, or 1.5 x t2. The threshold value t_{TH} may be adjusted according to design considerations, such as a distance d6 between teeth of a shaft 106, an acceleration of the rotation of the shaft 106, or other design considerations.

If it is determined in operation 504 that the timer value is less than or equal to the threshold value t_{TH}, then the process returns to operation 501 to await detection of the next waveform. However, if it is determined in operation 504 that the timer value is greater than the threshold value t_{TH}, then a missing tooth indicator is set in operation 505. In other words, it may be determined based on the time interval in which a next tooth is not detected that the rotor 106 has rotated a distance greater than the distance d1, corresponding to one period of the sensor 104 output, or a distance in which a next tooth 107 would be sensed.

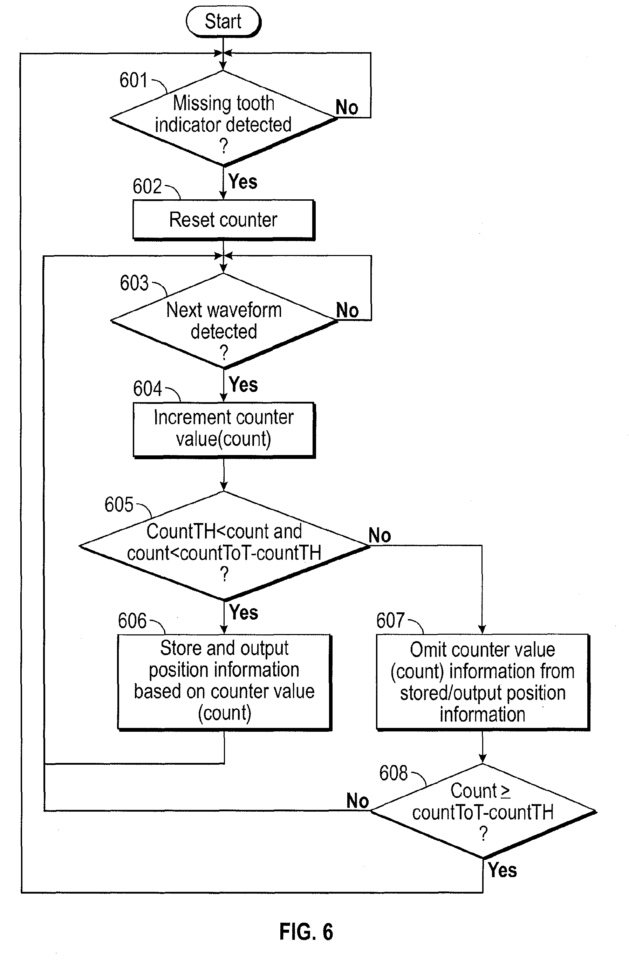

The missing tooth indicator may be output from the missing tooth logic 202 to one or more of the counter reset circuit 204 and the buffer 222. In an alternative embodiment, the missing tooth indicator is output directly to the speed conversion logic 224 from the missing tooth logic 202, rather than to the buffer 222. The counter reset circuit 204 may use the missing tooth information from the missing tooth logic 202 and the tooth counter information output from the tooth counter 216 to calculate a shaft position. FIG. 6 describes a process of calculating a shaft position in greater detail.

In operation 601, it is determined whether a missing tooth indicator has been detected. For example, the counter reset circuit 204 may determine whether the missing tooth indicator has been output from the missing tooth logic 202. When the missing tooth indicator is detected in operation 602, the counter reset circuit resets a shaft position counter in operation 602.

In operation 603, it is determined whether a waveform corresponding to a next time interval is detected. For example, the counter reset circuit 204 may receive an input from the gate logic 220 indicating that a next tooth 107 has been detected. In an alternative embodiment, the tooth counter 216 may determine whether a low-to-high transition has occurred by detecting an output of the zero cross detector 212. In operation 604, a position counter in the counter reset circuit 204 increments based on the detected waveform. In an alternative embodiment, the tooth counter 216 provides a counter value to the counter reset circuit 204.

In operation 605, it is determined whether the position counter value, count, is greater than a first threshold value count_{TH}, and less than a second threshold value corresponding to a total number of teeth (count_{TOT}) minus the threshold value (count_{TH}), or count_{TOT}-count_{TH}. Referring to FIG. 8, count_{TH} may correspond to a predetermined number of teeth 107, such as two teeth 107 or three teeth 107. For example, in an embodiment in which count_{TH} corresponds to two teeth 107, the missing tooth logic 202 will output the missing tooth indicator at position M, and when the first tooth 107a is detected, such that the position counter value is 1, it will be determined that the position counter value (1) is less than the threshold value (2), so operation 605 will proceed to operation 607. Similarly, if the position counter value is 6, then it will be determined in operation 605 that the difference count_{TOT}-count_{TH} (i.e. 7-2) is less than the position counter value, and the operation will proceed to operation 607.

In other words, the system 200 is configured to detect whether the shaft 106 is located within a predetermined distance, such as a distance of two teeth, d2 and d4, or three teeth d3 and d5, from a missing tooth M. When it is determined in operation 605 that the tooth 107 detected by the sensor 104 is within the predetermined threshold distance of the missing tooth M, the position counter value information, count, may be omitted from the shaft position information output by the counter reset circuit 204. In other words, because the waveforms in the time intervals closer to a missing tooth M time interval t3 are distorted, the position information generated by the waveforms, such as the waveforms of time intervals t2 and t4, may be distorted. By omitting the position information generated by the waveforms in the time intervals closest to the missing tooth M, more accurate position information may be provided.

In one embodiment encompassed by the present disclosure, when it is determined that a presently-detected tooth is within a predetermined threshold range, such as d2 or d4 of FIG. 8, for which shaft position information is not output, position information of previously-detected teeth 107 outside the threshold range may be output or stored to replace the detected position information. For example, if it is determined that the time for the shaft 106 to rotate a distance d1 between teeth 107d and 107e was a first time t7, then when it is determined that the shaft is located within the region defined by the missing tooth M or the threshold distances d2 and d4, the position counter value, count, that is stored or output may be incremented based on the time interval t7, rather than time intervals t1, t2, t3, t4, or t5. Likewise, position information, such as a rotation angle of the shaft 106, may be output based on the position counter value, count, determined with the time interval t7 rather than the detected time intervals t1, t2, t3, t4, or t5.

In other words, in one embodiment no new shaft position information is output while it is determined that the shaft 106 is positioned such that teeth 107 within a predetermined vicinity of the missing tooth M are detected by the sensor 104. In an alternative embodiment, current position information is extrapolated from previously-stored position information corresponding to teeth outside the predetermined vicinity of the missing tooth M, when it is determined that the shaft 106 is positioned such that teeth 107 within a predetermined vicinity of the missing tooth M are detected by the sensor 104.

While FIG. 6 illustrates in operation 605 determining whether a position counter value is within a predetermined range, and outputting the position information when the position counter value is within the predetermined range, in an alternative embodiment, the position counter value may be compared to a predetermined reference value, and the position information may be output when the position counter value is the same as the reference value.

For example, referring to FIG. 8, if it is determined that the tooth 107d is to be used as a position reference, since a waveform corresponding to tooth 107d would have little to no distortion from the missing tooth M, then the predetermined reference value may be set at 4, and a position indicator may be output when the position counter value is 4. In other words, the counter reset circuit 204 may count each detected waveform from the missing tooth M including the distorted waveforms corresponding to teeth 107a and 107b, as well as the waveform corresponding to tooth 107c, without outputting position information, such as a position indicator signal. However, once the waveform corresponding to tooth 107d is detected and the position counter value is incremented accordingly, the position indicator may be output to indicate that the shaft has rotated so that the tooth 107d corresponds to a position of the sensor 104. In such an embodiment, the detected waveforms corresponding to teeth 107 in the vicinity of a missing tooth M may be used to determine the location of a reference location, such as tooth 107d, but the output location information does not include information corresponding to the teeth in the vicinity of the missing tooth M.

In one embodiment of the present disclosure, the detection of the missing tooth may be used to determine a location of a particular position on the shaft. For example, the shaft 106 and teeth 107 and 108 may be connected to a fan, and a position designated as a top-dead-center of the fan may be used to perform calculations to determine fan trim balance or fan blade health. In such an embodiment, the missing tooth M is detected, a number of teeth 107 from the missing tooth M is detected to determine a position of the shaft 106, and the position information of the shaft 106 is stored or updated only when a predetermined number of teeth are detected after detecting the missing tooth M. Once the position information of the shaft 106 is determined, the top-dead-center position is calculated and an output corresponding to the top-dead-center position is generated based on the detected teeth 107 outside the predetermined range (such as two teeth, three teeth, etc.) from the missing tooth M.

Referring again to FIG. 6, in operation 608, it is determined whether the position counter value, count, is less than the difference, countTOT-count_{TH.} If not, then it is determined that the shaft position corresponds to teeth, such as teeth 107a and 107b trailing the missing tooth M in the rotation direction, and not teeth, such as teeth 107f and 107g leading the missing tooth M. In such a case, the process proceeds to operation 603, and a next waveform is detected. If the position counter value, count, is greater than or equal to countTOT-countTH, then the shaft position is within the threshold range preceding the missing tooth M, such as a distance d2 or d3, and the detected waveform information will be omitted from the shaft position information until after the missing tooth M is detected. Consequently, the process proceeds to operation 601 to await detection of the missing tooth.

If, in operation 605, it is determined that the position counter value, count, is greater than the threshold value count_{TH} and less than the difference, countTOT-countTH, then the position counter value, count, is stored and the current position information, such as a rotation angle of the shaft relative to a predetermined point, is based on the position counter value, count.

In embodiments of the present disclosure, position information, such as a rotation angle of the shaft 106, is based on a predetermined reference location, such as a predetermined tooth 107 or range of teeth 107. The teeth 107 within a threshold range of the missing tooth M are not used as the reference position to prevent inaccurate position calculations due to distortion. However, the reference position may be determined by detecting the missing tooth M and counting a predetermined number of teeth 107 away from the missing tooth M. For example, referring to FIGS. 3 and 8, since the waveforms of time periods t2 and t4 are distorted, corresponding to the teeth 107g and 107a, respectively, these teeth are not ideal as reference points to provide location information of a shaft 106. However, since the waveform corresponding to tooth 107c would have less distortion than that of teeth 107a and 107b, the system 200 may detect the missing tooth M, detect two teeth 107a and 107b succeeding the missing tooth M, and then may set the position information based on the third detected tooth 107c from the missing tooth M. As a result, although the distorted waveforms corresponding to the missing tooth M, and teeth 107a and 107b are not used as references to determine a position of a shaft 106, they may be used to locate the reference tooth 107c having less distortion, and thus a more accurate position calculation.

Referring again to FIG. 4, in operation 403, a rotation speed of the shaft 106 may be calculated while omitting data corresponding to teeth 107 within a predetermined vicinity of the missing tooth M, or another tooth 108 having a different height than the teeth 107.

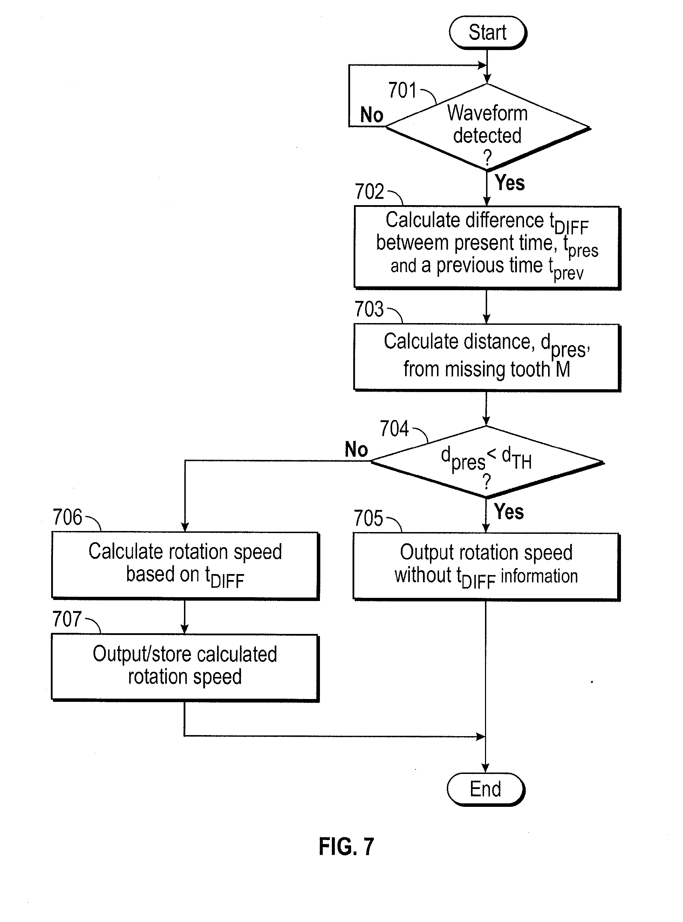

In embodiments of the present disclosure, the missing tooth M may be used to calculate a rotation speed of the shaft 106, while omitting the information corresponding to a waveform of the missing tooth M and teeth 107 close to the missing tooth M from the calculations of the shaft 106. FIG. 7 illustrates a process for calculating a rotation speed of a shaft 106 according to an embodiment of the present disclosure.

In operation 701, a waveform is detected. In operation 702 a difference t_{DIFF} between a present time t_{PRES} and a previous time t_{PREV} is calculated (t_{DIFF}=t_{PRES}-t_{PREV}). For example, the high frequency clock 214 may output clock signals at regular intervals. The time counter 218 may latch a counter value based on a waveform detected by the gate logic 220. The value t_{DIFF} represents the time from a predetermined part of one tooth 107 to the same part of the next tooth.

In operation 703, a distance d_{PRES} is calculated from the missing tooth M. For example, the distance d_{PRES} may be determined based on the process described in FIG. 6. If it is determined in operation 704 that the distance d_{PRES} is within a threshold distance d_{TH}, then a rotation speed of the shaft 106 may be stored and/or output without taking into account the presently calculated difference t_{DIFF}.

For example, the rotation speed may be calculated in operation 706 by calculating the difference t_{DIFF} and dividing the difference t_{DIFF} by the known distance d1 from one point of a tooth 107 to the same point of the next tooth. However, since the waveforms in the time intervals closest to the missing tooth M generate distorted waveforms, the presently measured time value t_{PRES} and the previously measured time value t_{PREV} may be lengthened or shortened by the distortion, providing inaccurate rotation rate measurements.

In embodiments of the present disclosure, when it is determined that the tooth 107 presently detected by the sensor 104 is within a predetermined threshold range, such as two teeth 107 from the missing tooth M, corresponding to distances d2 and d4, or three teeth 107 from the missing tooth M, corresponding to distances d3 and d5, the position and time data corresponding to these teeth 107 may be omitted from the calculation of the rotation rate of the shaft 106.

In one embodiment, the time information, such as t_{DIFF} or position information output from the buffer 222 is locked at a value corresponding to a last tooth 107 outside the threshold range (such as d2 and d4) while the measured position and time values correspond to teeth located within the threshold range (such as d2 and d4). For example, if the threshold range is defined as two teeth, corresponding to distance d2 or distance d4, and it is determined that the presently detected tooth is the tooth 107b, then the time information, t_{DIFF} and tooth counter information output from the buffer 222 may correspond to the most recently detected tooth outside the threshold range, or tooth 107e.

In another embodiment, as indicated in FIG. 4, operation 404, a present shaft speed may be calculated based on extrapolated time information t_{DIFF} and tooth counter information. For example, in one embodiment a rate of acceleration of the shaft 106 is calculated based on stored time and position data, and a present shaft speed is calculated by extrapolation of the previously calculated time information t_{DIFF} and tooth counter information while it is determined that the presently detected teeth 107 are within a predetermined vicinity of the missing tooth M.

For example, if the threshold range corresponds to distances d2 and d4, and if it was determined based on the detected values of teeth 107d and 107e that the shaft 106 speed was decreasing at a calculated rate, then the decrease may be applied at calculated intervals throughout the time intervals corresponding to the distance d2, the missing tooth M, and the distance d4, and the next measurements may be taken to adjust the shaft speed calculation based on the detected characteristics of the tooth 107c.

Referring again to FIG. 7, when it is determined in operation 704 that the distance d_{PRES} is greater than or equal to d_{TH}, the rotation speed is calculated in operation 706 based on the detected time t_{DIFF}, and the rotation speed is output and/or stored in operation 707.

Embodiments of the present disclosure relate to a shaft 106 having a plurality of teeth 107 of a same height, and one or more teeth 108 of a different height or one or more missing teeth M. The teeth 108 having a different height or missing teeth M are used to determine a position and speed of the shaft 106, while omitting the position information corresponding to the teeth 108 or missing teeth M from the calculations of position and speed. For example, the location of a missing tooth M may be used as a reference point for a counter, and a tooth 107 three or four teeth away from the missing tooth M may be used as a reference point to calculate a shaft position. Since the location of the missing tooth M is known, the detection of the missing tooth M may be used to accurately locate the reference point. However, since the waveforms in the vicinity of the missing tooth M are distorted, these waveforms are not relied upon in calculations related to the shaft position, and instead the reference point is used as the basis for determining a shaft position.

Similarly, the time intervals corresponding to teeth in the vicinity of a missing tooth M are not used to calculate a shaft rotation speed. Instead, these values are omitted from shaft rotation speed calculations, and the values of the teeth farther away from the missing tooth M are used to more accurately calculate shaft rotation speed values.

While FIG. 2 of the present disclosure has been shown in block diagram form to illustrate different logic, counter, and calculation units, it is understood that the different elements in FIG. 2 may include one or more processors, counters, oscillators, and supporting logic and other circuitry. For example, the missing tooth logic 202, gate logic 220, and speed conversion logic 224 may include one or more processor chips or may be part of one processor. In some embodiments, the logic components include computer programs stored in memory and executed by a processor to cause the processor to perform the described logic operations. In other embodiments, the logic components include transistors that form logic gates to perform the described logic operations. It is further understood that the zero cross detector 212 may include one or more comparators, the tooth counter 216, the time counter 218, and the counter reset circuit 204 may include one or more memory chips, registers, latches, and other circuitry to perform counter and reset operations described in the present disclosure.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method of detecting rotation of a shaft having a plurality of teeth and at least one missing tooth, the method comprising:
detecting a first tooth of the plurality of teeth located on the shaft;
determining whether the first tooth is located within a predetermined distance of the at least one missing tooth; and
omitting data corresponding to the first tooth from at least one of a shaft position calculation and a shaft rotation speed calculation based on a determination that the first tooth is located within the predetermined distance of the at least one missing tooth.

2. The method of claim 1, further comprising:
detecting the at least one missing tooth, wherein detecting the at least one missing tooth comprises:
detecting a waveform corresponding to one of the plurality of teeth;
resetting a timer based on detecting the waveform; and
determining that the at least one missing tooth is detected when a value of the timer corresponds to a predetermined threshold value prior to detecting a next waveform corresponding to a next tooth of the plurality of teeth.

3. The method of claim 1 or 2, wherein determining whether the first tooth is located within the predetermined distance of the at least one missing tooth comprises:
detecting the at least one missing tooth;
detecting a first number of teeth after detecting the at least one missing tooth, the detected first number of teeth including the first tooth;
comparing the first number of teeth to a threshold number; and
performing the shaft position calculation omitting first position information corresponding to the first tooth based on a determination that the first number of teeth is less than the threshold number.

4. The method of claim 3, further comprising:
detecting a second tooth of the plurality of teeth;
detecting a second number of teeth after detecting the missing tooth, the second number of teeth including the second tooth; and
performing the shaft position calculation including second position information corresponding to the second tooth based on a determination that the second number of teeth is equal to or greater than the threshold number.

5. The method of claim 1, 2, 3 or 4, further comprising:
outputting at least one of extrapolated shaft position information and extrapolated shaft rotation speed information based on the determination that the first tooth is located within the predetermined distance of the at least one missing tooth.

6. The method of any preceding claim, further comprising:
performing the shaft rotation speed calculation, comprising:
calculating a difference between a present time corresponding to a time at which the first tooth is detected and a previous time corresponding to a time at which a previous tooth of the plurality of teeth was detected; and
outputting the shaft speed rotation information corresponding to the calculated difference when it is determined that the first tooth is located outside the predetermined distance of the at least one missing tooth, and outputting shaft speed rotation information that omits the calculated difference when it is determined that the first tooth is located inside the predetermined distance of the at least one missing tooth.

7. An apparatus, comprising:
a sensor configured to detect a first tooth from among a plurality of teeth located circumferentially on a rotating shaft; and
a processor configured to determine whether the first tooth is located within a predetermined range of a missing tooth, and configured to calculate at least one of shaft position data and shaft rotation speed data having data corresponding to the first tooth omitted based on the determination that the first tooth is located within the predetermined range of the missing tooth.

8. The apparatus of claim 7, further comprising:
a missing tooth logic circuit configured to detect the missing tooth by detecting one tooth from among the plurality of teeth, resetting a timer based on a detection of the one tooth, comparing a timer value to a predetermined threshold timer value, and determining that the timer value is greater than the predetermined threshold timer value before a next tooth is detected from among the plurality of teeth.

9. The apparatus of claim 7 or 8, further comprising a position counter circuit configured to receive as inputs a tooth detection signal from the sensor and a missing tooth indicator from a missing tooth logic circuit, and configured to output a shaft position information signal.

10. The apparatus of claim 9, wherein the position counter circuit is configured to increment a position counter to a first position counter value based on a first number of teeth detected up to the first tooth after the missing tooth is detected, to compare the first position counter value to a predetermined threshold number, and to output first shaft position information having position information of the first tooth omitted based on a determination that the first position counter value is not equal to the predetermined threshold number.

11. The apparatus of claim 10, wherein the sensor is configured to detect a second tooth from among the plurality of teeth, and
wherein the position counter circuit is configured to increment a position counter to a second position counter value based on a second number of teeth detected up to the second tooth after the missing tooth is detected, to compare the second position counter value to the predetermined threshold number, and to output second shaft position information including position information of the second tooth based on a determination that the second position counter value is equal to the predetermined threshold number.

12. The apparatus of claim 10, wherein the position counter circuit is configured to output first shaft position information extrapolated from third shaft position information, the third shaft position information corresponding to at least one previously-detected tooth from among the plurality of teeth.

13. The apparatus of claim 9, wherein the position counter circuit is configured to increment a position counter to a first position counter value based on a first number of teeth detected up to the first tooth after the missing tooth is detected, to compare the first position counter value to first and second predetermined threshold numbers, and to output shaft position information having position information of the first tooth omitted based on a determination that the first position counter value is either less than the first predetermined threshold number or greater than the second predetermined threshold number.

14. The apparatus of claim 13, wherein the sensor is configured to detect a second tooth from among the plurality of teeth, and
wherein the position counter circuit is configured to increment a position counter to a second position counter value based on a second number of teeth detected up to the second tooth after the missing tooth is detected, to compare the second position counter value to the first and second predetermined threshold numbers, and to output shaft position information including position information of the second tooth based on a determination that the second position counter value greater than or equal to the first predetermined threshold number and less than or equal to the second predetermined threshold number.

15. The apparatus of any of claims 7 to 14, further comprising:
speed conversion logic configured to calculate a first time interval between the first tooth and a second tooth preceding the first tooth and to calculate a first rotation speed of the shaft based on the calculated first time interval,
wherein the speed conversion logic is further configured to output first shaft rotation speed information omitting the first rotation speed based on a determination that the first tooth is located within the predetermined range of the missing tooth; preferably
wherein the sensor is configured to detect a third tooth from among the plurality of teeth,
the speed conversion logic is configured to calculate a second time interval between the third tooth and a fourth tooth preceding the third tooth and to calculate a second rotation speed of the shaft based on the calculated second time interval, and
the speed conversion logic is configured to output second shaft rotation speed information including the second rotation speed based on a determination that the third tooth is located outside the predetermined range of the missing tooth.
